(19) **Europäisches Patentamt European Patent Office Office européen des brevets**

(11) **EP 1 783 338 B1**

(12) **EUROPEAN PATENT SPECIFICATION**

(45) Date of publication and mention
of the grant of the patent:
**11.02.2009 Bulletin 2009/07**

(51) Int Cl.:
***F01N 11/00*** *(2006.01)*

(21) Application number: **06022839.2**

(22) Date of filing: **02.11.2006**

(54) **Apparatus and method for diagnosing deterioration of a catalyst, and catalytic converter apparatus for exhaust emission of engine**

Vorrichtung und Verfahren zur Diagnose der Verschlechterung eines Katalysators und Katalysatorvorrichtung für die Emission einer Brennkraftmaschine

Dispositif et méthode de diagnostic de détérioration d'un catalyseur et pot catalytique pour émissions d'echappement d'un moteur à combustion interne

(84) Designated Contracting States:
**DE**

(30) Priority: **02.11.2005 JP 2005319643**

(43) Date of publication of application:
**09.05.2007 Bulletin 2007/19**

(73) Proprietor: **HITACHI, LTD.**
**Chiyoda-ku**
**Tokyo 100-8280 (JP)**

(72) Inventor: **Asano, Seiji**
**Hitachi, Ltd., Intellectual Property Group**
**Chiyoda-ku**
**Tokyo 100-8220 (JP)**

(74) Representative: **Beetz & Partner**
**Patentanwälte**
**Steinsdorfstrasse 10**
**80538 München (DE)**

(56) References cited:
**WO-A-20/05066472**    **DE-A1- 19 826 284**
**US-A1- 2003 070 420**    **US-A1- 2003 159 434**
**US-A1- 2004 000 135**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND OF THE INVENTION

The present invention relates to an apparatus and method for diagnosing deterioration of a catalyst for an internal combustion engine (called an engine for short) and a catalytic converter apparatus for exhaust emission of the engine, and more particularly to an apparatus and method for diagnosing deterioration of a catalyst to judge deterioration of a three-way catalyst for purification of exhaust gas disposed in an exhaust gas passage of the engine and a catalytic converter apparatus for exhaust emission of the engine.

Deterioration of a catalyst for an engine having a plurality of catalysts for purification of exhaust gas disposed in an exhaust pipe is diagnosed by oxygen sensors disposed before and after the catalyst which is located closest to the engine exhaust port and according to outputs from the two oxygen sensors. Where it is judged according to the outputs from the oxygen sensors that the subject catalyst is ineffective (lost of exhaust emissions reduction capability), all the plural catalysts are replaced.

There is another prior art related to a diagnostic apparatus in that a front catalyst (upper stream catalyst) and a rear catalyst (down stream catalyst) are disposed in an exhaust gas passage, oxygen sensors each are mounted on the upper stream of the front catalyst, the intermediate section between the front and rear catalysts and the down stream of the rear catalyst, the front catalyst is diagnosed by the oxygen sensors mounted on the upper and lower streams of the front catalyst, and the front catalyst and the rear catalyst are collectively diagnosed by the oxygen sensor on the upper stream of the front catalyst and the oxygen sensor on the down stream of the rear catalyst (e.g., U. S. Patents No. 5,740,676 and 6,003,309).

WO 2005/066472 A1 discloses an apparatus for evaluating the deterioration condition of a catalyst of an internal combustion engine. The apparatus forcedly sets the air/fuel ratio upstream of a catalyst provided in an exhaust system of an internal combustion engine at a rich condition or a lean condition on the basis of a detected value of a sub $O_2$ sensor downstream of the catalyst in the internal combustion engine and evaluates the deterioration condition of the catalyst. The air/fuel ratio control is reversed so that the air/fuel ratio upstream of the catalyst becomes a lean condition or a rich condition when "egasum" has reached a predetermined value Ga, "egasum" being an integrated value of an admitted air volume (an integration count of the amount of exhaust gas passing through the catalyst) in the period after the sub $O_2$ sensor outputs a detected value, which shows a rich condition or a lean condition, until the reversing of the output of the sub $O_2$ sensor.

SUMMARY OF THE INVENTION

The emission control regulation is being tightened every year, and a threshold value level of deterioration judging for judging a catalyst as ineffective is becoming low accordingly, so that it is necessary to make judgment of effective/ineffective when the catalyst is slightly deteriorated.

But, the prior art cannot detect accurately a slight degree of deterioration of the catalyst. Therefore, it becomes difficult to diagnose accurately the deterioration of the catalyst in compliance with the emission control regulation which is tightened more and more every year.

In a case where the deterioration is diagnosed by a conventional catalyst system having a plurality of catalysts disposed in an exhaust pipe, an effective rear catalyst is also replaced when a front catalyst is judged as ineffective, so that the catalyst replacement cost becomes high. And, even if the oxygen sensor is disposed before and after the individual catalysts, the system cost increases.

The present invention has been made in view of the above circumstances and provides an apparatus and method for diagnosing deterioration of a catalyst that can perform an accurate diagnosis of the deterioration of the catalyst and a catalytic converter apparatus for exhaust emission in compliance with the emission control regulation being tightened more and more every year and can reduce the cost.

In order to complete the object, an apparatus and a method for diagnosing deterioration of a catalyst for an internal combustion engine according to claims 1 and 5, respectively are provided.

The apparatus for diagnosing deterioration of a catalyst for an internal combustion engine according to the invention preferably adds a volume of a space between the first catalyst and the second catalyst to elements contributing to the deterioration of the second catalyst when a relationship of the first catalyst to the deterioration property due to the combination of the first catalyst and the second catalyst is derived.

In the apparatus for diagnosing deterioration of a catalyst for an internal combustion engine according to the invention, the sensors for detecting the particular exhaust component are $O_2$ sensors which output a binary output for the presence or not of oxygen contained in the exhaust gas or sensors which output a signal corresponding to an oxygen density or a fuel concentration contained in the exhaust gas.

In order to achieve the object, the method for diagnosing deterioration of a catalyst for an internal combustion engine according to the invention is a method for diagnosing deterioration of a catalyst for an internal combustion engine, having a first catalyst and a second catalyst and provided with sensors for detecting a particular exhaust component before and after the first catalyst, comprising determining previously a relationship between a deterioration property involved in clarification of an exhaust gas from the internal combustion engine by a combination of the first catalyst and the second catalyst and a deterioration property of the first catalyst; calculating a deterioration degree of the first catalyst according to outputs from the sensors disposed before and after the first catalyst; judging deterioration of the first catalyst according to the deterioration degree; and judging deterioration of the second catalyst according to the deterioration degree of the first catalyst.

In order to achieve the object, the catalytic converter apparatus according to the invention is a catalytic converter apparatus for exhaust emission which is disposed in an exhaust gas passage of an internal combustion engine, the apparatus being separated into a first catalyst and a second catalyst, and a volume of the first catalyst disposed on the upper stream side of an exhaust gas flow in the exhaust gas passage is smaller than that of the second catalyst.

The catalytic converter apparatus according to the invention preferably has a proportion of a volume of the first catalyst to that of the second catalyst determined to be smaller according to a proportion of an unburnt gas conversion efficiency of a combination of the first and second catalysts when they are new to an unburnt gas conversion efficiency at the time when an emission level is judged as failure.

The catalytic converter apparatus according to the invention preferably has the first catalyst and the second catalyst stored in one and the same housing.

It is known that the catalyst is deteriorated starting from its front portion which is closer to the exhaust port of the internal combustion engine. Accordingly, the present invention divides the catalyst according to a proportion between an unburnt gas conversion efficiency at the time of a combination of new catalysts and an unburnt gas conversion efficiency when an emission level is judged as failure, so that even if the deterioration is little as a whole, the front catalyst provided with an oxygen sensor is deteriorated quickly, and it is easy to detect a deterioration degree. The deterioration of the rear catalyst is determined according to the deterioration degree and the number of replacement times of the front catalyst, so that the front catalyst is not replaced even if it is deteriorated.

Other objects, features and advantages of the invention will become apparent from the following description of the embodiments of the invention taken in conjunction with the accompanying drawings.

BRIEF DESCRIPTION OF THE DRAWINGS

Fig. 1 is an overall structure view showing one embodiment of a control system of an internal combustion engine (engine) to which the apparatus for diagnosing deterioration of a catalyst according to the invention is applied.

Fig. 2 is a block diagram showing one embodiment of an internal combustion engine control unit to which the apparatus for diagnosing deterioration of a catalyst according to the invention is applied.

Fig. 3 is a control block diagram of an engine control unit for performing a method for diagnosing deterioration of a catalyst according to the invention.

Fig. 4 is a block diagram showing one embodiment of a front catalyst deterioration degree arithmetic processing section which is included in a catalyst deterioration detection unit for performing the method for diagnosing deterioration of a catalyst according to the invention.

Fig. 5 is a graph showing an example of a relationship between a correlation value and a deterioration degree of the outputs of the front and rear $O_2$ sensors.

Fig. 6A, Fig. 6B, Fig. 6C are a structure view of a general example of a catalytic converter apparatus not according to the present invention and graphs showing examples of behaviors of the outputs of the front and rear $O_2$ sensors when it must be judged as catalyst ineffective.

Fig. 7A, Fig. 7B, Fig. 7C are a structure view of the catalytic converter apparatus according to the invention and graphs showing behaviors of the outputs of the front and rear $O_2$ sensors when it must be judged as catalyst ineffective, and Fig. 7D is a graph showing a comparative example of the output of the rear $O_2$ sensor.

Fig. 8 is a graph showing an example of a relationship between a correlation value and a deterioration degree of the outputs of the front and rear $O_2$ sensors of the catalytic converter apparatus according to the invention.

Fig. 9 is a graph showing an example of a relationship between a front catalyst deterioration degree and a rear catalyst deterioration degree of the catalytic converter apparatus according to the invention.

Fig. 10 is a graph showing an example of a relationship between a front catalyst deterioration degree and a front catalyst deterioration degree integrated value (rear catalyst deterioration index) of an apparatus for diagnosing deterioration of a catalyst according to the invention.

Fig. 11 is an explanatory view showing a catalyst separation example of the catalytic converter apparatus according to the invention.

Fig. 12 is a block diagram showing an example of one structure of an effective/ineffective judgment processing section for the front catalyst and the rear catalyst of the apparatus for diagnosing deterioration of a catalyst according to the invention.

Fig. 13 is a block diagram showing an example of another structure of the effective/ineffective judgment processing section for the front catalyst and the rear catalyst of the apparatus for diagnosing deterioration of a catalyst according to the invention.

Fig. 14 is a block diagram showing in detail the rear catalyst effective/ineffective judging section of the apparatus for diagnosing deterioration of a catalyst according to the invention.

Fig. 15 is a flowchart showing a processing flow of overall control performed by an engine control unit including catalyst deterioration judgment of the embodiment.

Fig. 16 is a flowchart showing a processing flow for calculation of a catalyst deterioration degree of the front catalyst by a front catalyst deterioration degree arithmetic processing section of the embodiment.

Fig. 17 is a flowchart showing a processing flow for judgment of effective/ineffective of the front catalyst and the rear catalyst performed by an effective/ineffective judgment processing section of the embodiment.

Fig. 18 is a flowchart showing a processing flow of the front catalyst deterioration judging value integration and the judging value storing performed by an ineffective judgment processing section.

Fig. 19 is a flowchart showing a processing flow for judgment of effective/ineffective of the front catalyst and the rear catalyst performed by the effective/ineffective judgment processing section of another embodiment.

Fig. 20 is a flowchart showing a processing flow for judgment of effective/ineffective of the rear catalyst performed by the rear catalyst effective/ineffective judging section of the embodiment.

Fig. 21 is an overall structure view showing another embodiment of the internal combustion engine (engine) to which the apparatus for diagnosing deterioration of a catalyst of the invention is applied. It is another example of the engine and its periphery controlled by the fuel control device of the invention.

DESCRIPTION OF THE EMBODIMENTS

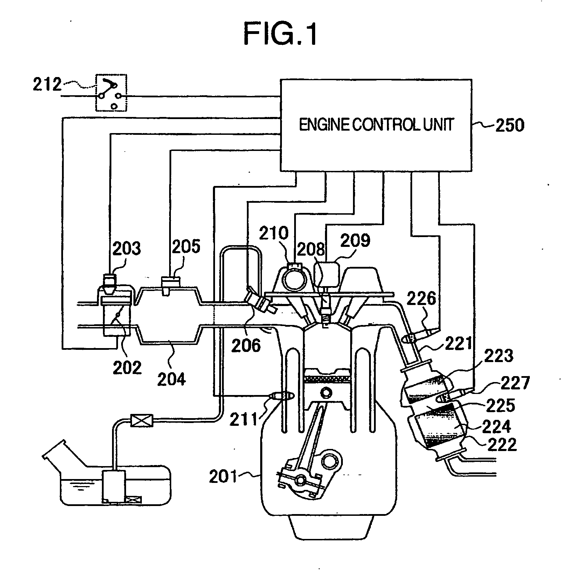

One embodiment of an internal combustion engine (called an engine for short) to which the apparatus for diagnosing deterioration of a catalyst according to the invention is applied will be described with reference to Fig. 1.

An engine 201 has in an intake system a throttle valve 202 which is a metering device for an amount of intake air, an idle speed control valve (ISC valve) 203 which controls the idling speed of the engine 201 by controlling a passage area of a passage which bypasses the throttle valve 202 and is connected to an intake pipe 204, an intake pipe pressure sensor 205 which detects a pressure within the intake pipe 204, and fuel injection valves 206 which inject fuel required by the engine 201.

The engine 201 is provided with ignition plugs 208 for igniting a mixture of air and fuel supplied into cylinders (combustion chambers) 207, and ignition coils (ignition modules) 209 for supplying an ignition energy to the ignition plugs 208 according to the ignition signal being outputted from an engine control unit 250.

The engine 201 is also provided with a cam angle sensor 210 for detecting a cam angle and a water temperature sensor 211 for detecting a temperature of cooling water.

An exhaust pipe 221 has a front catalyst (upper stream catalyst=first catalyst) 223 as a three-way catalyst and a rear catalyst (down stream catalyst=second catalyst) 224 as a three-way catalyst which are separately disposed within a single housing 222.

Specifically, the catalytic converter apparatus for exhaust emission is divided into the front catalyst 223 and the rear catalyst 224, and the front catalyst (the upper stream catalyst) 223 which is mounted on the upstream side of the rear catalyst 224 viewed from an exhaust gas flow through the exhaust pipe 221 has a volume smaller than that of the rear catalyst (the down stream catalyst) 224. And, an intermediate space 225 is defined between the front catalyst 223 and the rear catalyst 224 within the housing 222.

A front $O_2$ sensor 226 which detects an oxygen density in exhaust gas and outputs a binary signal is mounted on the upper stream side (viewed from the exhaust gas flow in the exhaust pipe 221) of the front catalyst 223 of the exhaust pipe 221. The housing 222 is provided with a rear $O_2$ sensor 227 which detects an oxygen density in the exhaust gas within the intermediate space 225 and outputs a binary signal.

The engine 201 is operated and stopped by an ignition key switch 212 which is a main switch.

The idling speed of the engine 201 in this embodiment is controlled by the idle speed control valve 203, but where the throttle valve 202 is controlled by means of a motor or the like, the idling speed can be controlled by the throttle valve 202, and the idle speed control valve 203 can be eliminated.

Fuel control including air/fuel ratio control of the engine 201, ignition timing control, idle control and catalyst deterioration diagnosis are performed by the engine control unit 250.

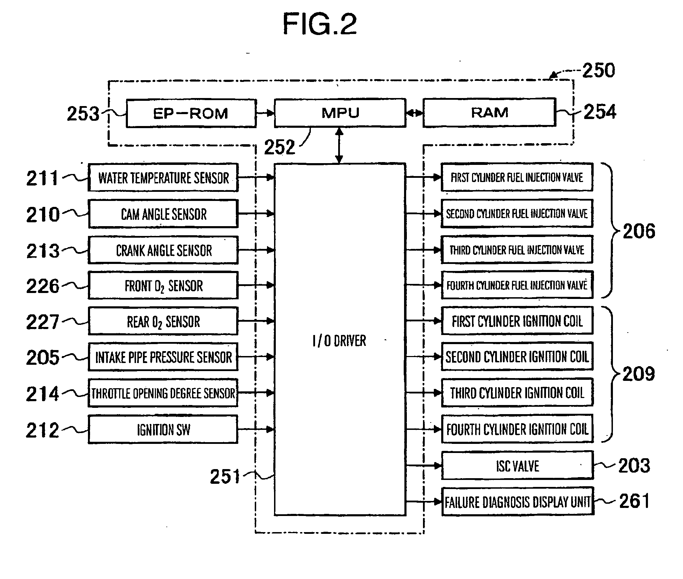

The engine control unit 250 is, for example, an electronically-controlled type based on a microcomputer and as shown in Fig. 2, comprised of an I/O LSI (Input/Output Large-scale integrated circuit) 251 which converts electrical signals of the individual sensors which are mounted on the engine 201 into signals for digital arithmetic processing and converts the control signals for digital calculation into drive signals for a real actuator, an arithmetic unit (MPU) 252 which judges the state of the engine 201 according to the signals for digital arithmetic processing from the I/O LSI 251, performs arithmetic processing of an amount of fuel, ignition timing, catalyst deterioration diagnosis and the like required by the engine 201 according to a prescribed procedure and sends the calculated values to the I/O LSI 251, a nonvolatile memory (EP-ROM) 253 which stores the control procedure and control constant of the arithmetic unit 252, and a volatile memory (RAM) 254 which stores the results calculated by the arithmetic unit 252.

Even if the ignition switch 212 is off and power is not supplied to the engine control unit 250 from a battery power supply, a back-up power supply may be connected to the volatile memory 254 in order to store the memory contents.

In this embodiment, the engine control unit 250 receives signals from each of the water temperature sensor 211, the cam angle sensor 210, a crank angle sensor 213, the front $O_2$ sensor 226, the rear $O_2$ sensor 227, the intake pipe pressure sensor 205, a throttle opening degree sensor 214 and the ignition switch 212, and outputs a fuel injection command signal to the fuel injection valves 206, an ignition command signal to the ignition coils 209 and an opening degree command signal to the idle speed control valve 203, and a display command to a failure diagnosis display unit 261 according to a catalyst deterioration diagnosed result.

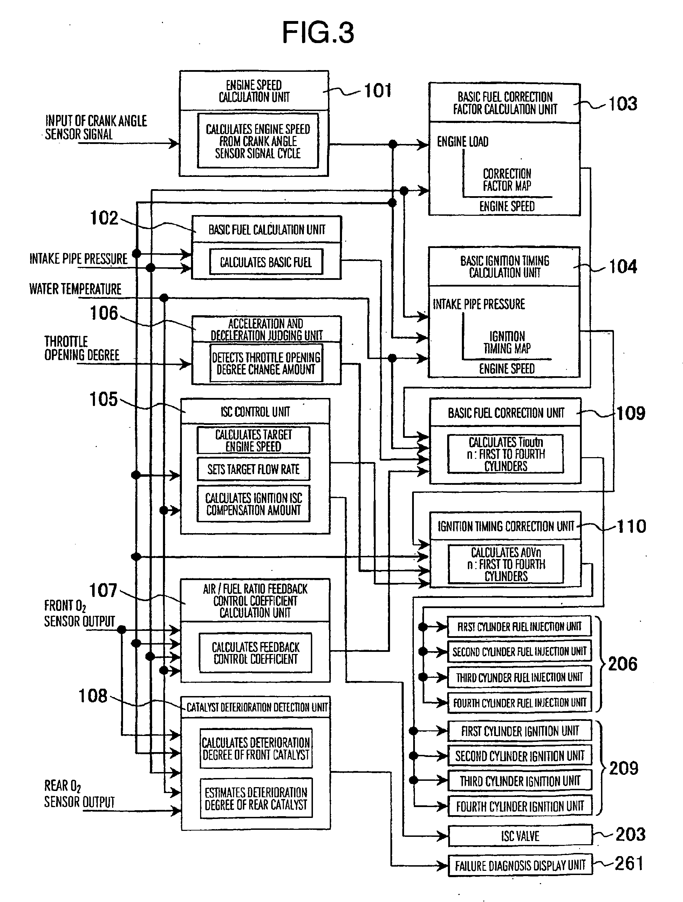

Then, one embodiment of a control block of the engine control unit 250 to perform a method for diagnosing deterioration of a catalyst according to the invention will be described with reference to Fig. 3.

The engine control unit 250 executes a computer program to embody an engine speed calculation unit 101, a basic fuel calculation unit 102, a basic fuel correction factor calculation unit 103, a basic ignition timing calculation unit 104, an ISC control unit 105, an acceleration and deceleration judging unit 106, an air/fuel ratio feedback control coefficient calculation unit 107, a catalyst deterioration detection unit (catalyst deterioration diagnostic unit) 108, a basic fuel correction unit 109, and an ignition timing correction unit 110 by means of software.

The engine speed calculation unit 101 counts the electrical signals of the crank angle sensor 213 which is set to a prescribed crank angle position of the engine 201, mainly the number of inputs per unit time of changes in pulse signals, and calculates the number of revolutions per unit time of the engine 201 by performing arithmetic processing.

The basic fuel calculation unit 102 calculates basic fuel which is required by the engine 201 according to the engine speed calculated by the engine speed calculation unit 101 and an intake pipe pressure (engine load) detected by the intake pipe pressure sensor 205 which is mounted on the intake pipe 204 of the engine 201.

The basic fuel correction factor calculation unit 103 calculates a correction factor of the basic fuel, which is calculated by the basic fuel calculation unit 102, in the individual operation regions of the engine 201 according to the engine speed calculated by the engine speed calculation unit 101 and the intake pipe pressure (engine load) detected by the intake pipe pressure sensor 205.

The basic ignition timing calculation unit 104 determines optimum ignition timing of the engine 201 by map retrieving or the like based on the engine speed calculated by the engine speed calculation unit 101 and the intake pipe pressure(representing engine load) detected by the intake pipe pressure sensor 205.

The ISC control unit 105 determines a target idling speed value in order to keep the idling speed of the engine 201 at a prescribed value and calculates a target flow rate and an ISC ignition timing compensation amount to the ISC valve 203. The ISC control unit 105 outputs an ISC valve signal based on the target flow rate to the ISC valve 203. Thus, the ISC valve 203 is driven so as to provide the target flow rate for idling.

The acceleration and deceleration judging unit 106 processes electrical signals outputted from the throttle opening degree sensor 214 to judge from the throttle opening degree change amount whether the engine 201 is in an acceleration or deceleration state and calculates an ignition timing compensation amount for the acceleration or deceleration.

The air/fuel ratio feedback control coefficient calculation unit 107 performs air/fuel ratio feedback control according to a sensor signal of the front $O_2$ sensor 226 on the upper stream side of the front catalyst 223, an engine speed, an intake pipe pressure and an engine water temperature.

The catalyst deterioration detection unit 108 judges a deterioration degree of the front catalyst 223 according to the sensor signal of the front $O_2$ sensor 226 which is on the upper stream side of the front catalyst 223, the sensor signal of the rear $O_2$ sensor 227 which is on the down stream side of the front catalyst 223, the engine speed, the intake pipe pressure and the engine water temperature and also judges a deterioration degree of the rear catalyst 224 according to the judged result. The catalyst deterioration detection unit 108 outputs a display command to the failure diagnosis display unit 261 to notify a driver about a catalyst failure according to the ineffective/effective judgment made on the basis of the deterioration degree.

The basic fuel correction unit 109 corrects the basic fuel, which is calculated by the basic fuel calculation unit 102, by using the correction factor of the basic fuel correction factor calculation unit 103, the air/fuel ratio feedback control coefficient of the air/fuel ratio feedback control coefficient calculation unit 107 and the like and outputs the fuel injection command signal according to the corrected amount of fuel to the fuel injection valves 206 of the individual cylinders. Thus, the fuel injection valves 206 inject a required amount of fuel into the individual cylinders.

The ignition timing correction unit 110 corrects the basic ignition timing, which is determined by the basic ignition timing calculation unit 104, by using the ISC ignition timing compensation amount of the ISC control unit 105, the ignition timing compensation amount for acceleration or deceleration of the acceleration and deceleration judging unit 106 and the like and outputs the corrected ignition timing command signal to the ignition coils 209 of the individual cylinders. Thus, the ignition plugs 208 of the individual cylinders cause a spark discharge with the required ignition timing to ignite the mixture flowing into the cylinders.

In this embodiment, the fuel control is established by detecting an intake pipe pressure, but the fuel control can also be established by detecting an amount of intake air of the engine 201.

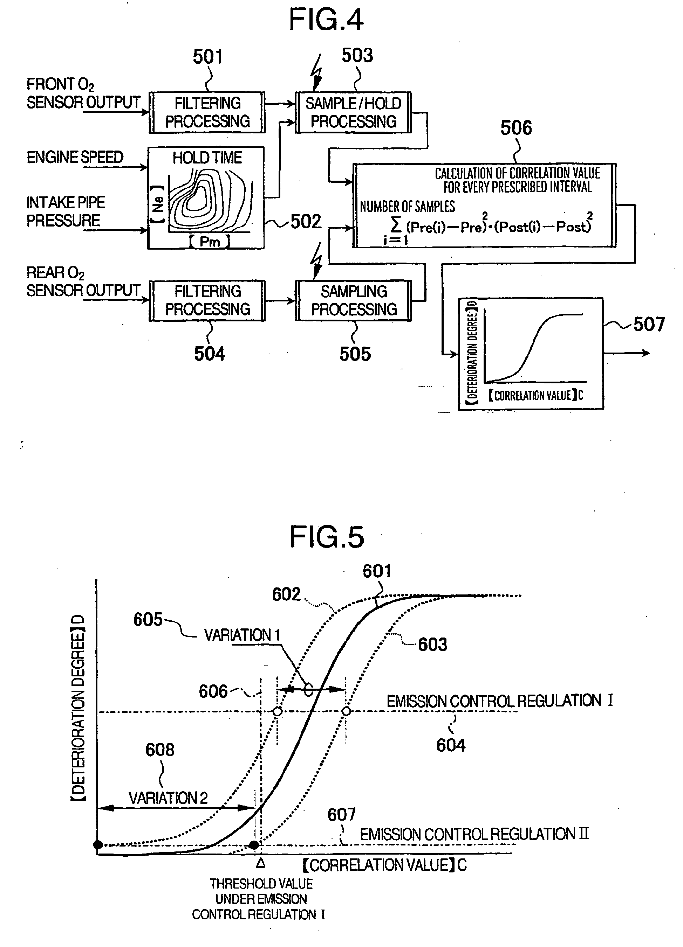

One embodiment of the front catalyst deterioration degree arithmetic processing section included in the catalyst deterioration detection unit 108 will be described in detail with reference to Fig. 4.

The catalyst deterioration detection unit 108 has a filtering processing section 501, a hold time setting section 502, a sampling hold processing section 503, another filtering processing section 504, a sampling processing section 505, a correlation value calculation section 506, and a deterioration degree calculation section 507.

The filtering processing section 501 filters the output voltage of the front $O_2$ sensor 226. The filtering is performed by a weighted average or the like.

The hold time setting section 502 map retrieves a hold time for combining the output phases of the front $O_2$ sensor 226 and the rear $O_2$ sensor 227 according to the engine speed and the intake pipe pressure.

The sampling hold processing section 503 samples the output of the front $O_2$ sensor filtered by the filtering processing section 501 and processes to combine the phases of the output of the front $O_2$ sensor 226 and the output of the rear $O_2$ sensor 227 according to the hold time determined by the hold time setting section 502.

The filtering processing section 504 filters the output voltage of the rear $O_2$ sensor 227. The filtering processing is performed by the weighted average or the like in the same manner as the filtering of the output voltage of the front $O_2$ sensor 226.

The sampling processing section 505 samples the output of the rear $O_2$ sensor filtered by the filtering processing section 504.

The correlation value calculation section 506 calculates a correlation value C for every prescribed interval according to the sampled value of the front $O_2$ sensor 26 from the sampling hold processing section 503 and the sampled value of the rear $O_2$ sensor 227 from the sampling processing section 505.

The correlation value C is calculated by following equation (1):

$$C = \sum_{i=1}^{NUMBER\ OF\ SAMPLES} (Pre(i) - Pre)^2 \cdot (Post(i) - Post)^2 \qquad ...(1)$$

In the equation, "Pre" denotes a sampled value of the front $O_2$ sensor, and "Post" denotes a sampled value of the rear $O_2$ sensor.

The deterioration degree calculation section 507 determines a deterioration degree (deterioration judging value) D of the catalyst from the correlation value C for every prescribed interval calculated by the correlation value calculation section 506.

Fig. 5 shows an example of a relationship between the correlation value C and the deterioration degree D outputted from the front and rear $O_2$ sensors.

A line 601 indicates the middle value between the correlation value C and the deterioration degree D. The correlation value C and the deterioration degree D have a certain degree of width between lines 602 and 603 depending on individual variations with the line 601 at the center.

The threshold value becomes a line 604 when the deterioration degree D is ineffective under emission control regulation I, and the threshold value of the correlation value C judging that the catalyst deterioration is ineffective becomes a threshold value 606 under the emission control regulation I considering a width 605 of variation 1. Meanwhile, the threshold value under another emission control regulation II becomes a line 607 when the deterioration degree D is ineffective, and the threshold value of the correlation value D for judging the catalyst deterioration as ineffective can not be set considering a width 608 of variation 2.

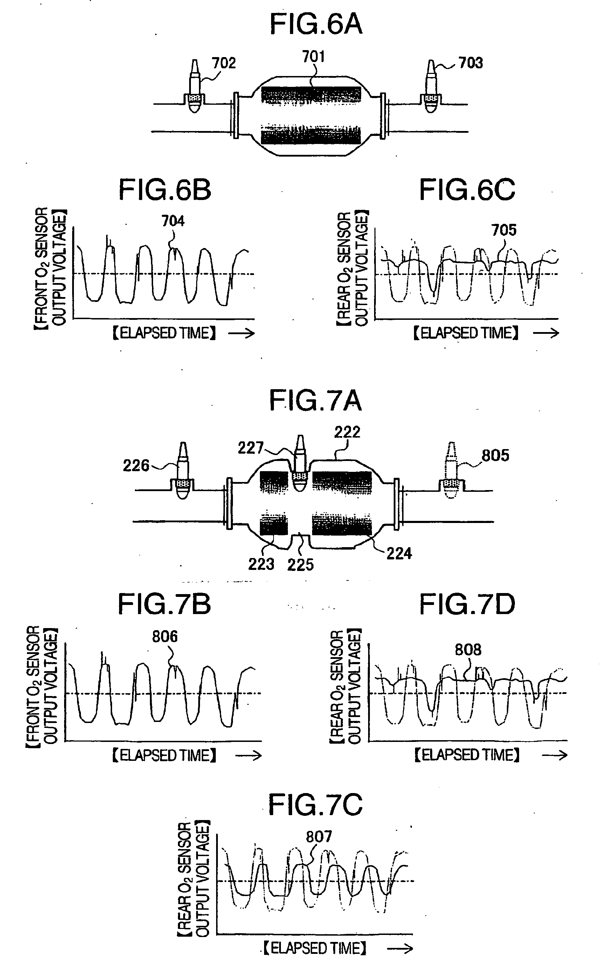

Fig. 6A, Fig. 6B, Fig. 6C show one example of output behaviors of the front and rear $O_2$ sensors in a case where a general example of catalyst is judged as catalyst ineffective.

As shown in Fig. 6A, a front $O_2$ sensor 702 and a rear $O_2$ sensor 703 are disposed before and after an ordinary catalyst 701 of a single bay.

A chart 704 of Fig. 6B shows the output of the front $O_2$ sensor 702, indicating that it is fluctuated with a prescribed voltage at the center by the air/fuel ratio feedback control of the engine control unit.

Meanwhile, the catalyst 701 is deteriorated considerably to an ineffective level in view of the emission control regulation but is not deteriorated so much as a whole. Therefore, the output of the rear $O_2$ sensor 703 is not fluctuated so heavily as indicated by a chart 705 in Fig. 6C. Thus, a correlation value for judgment of the catalyst deterioration becomes a small value close to 0.

Fig. 7A, Fig. 7B, Fig. 7C, Fig. 7D show an example of output behaviors of the front and rear $O_2$ sensors in a case where the catalyst of this embodiment is to be judged as catalyst ineffective.

As shown in Fig. 7A, the catalytic converter apparatus of this embodiment is splited into the front catalyst 223 and the rear catalyst 224 which are housed within the single housing 222, and the rear $O_2$ sensor 227 mounted in the intermediate space 225 which is defined between the front catalyst 223 and the rear catalyst 224. The front $O_2$ sensor 226 is mounted on the upper stream side of the front catalyst 223.

The output of the front $O_2$ sensor 226 is fluctuated with a prescribed voltage at the center by the air/fuel ratio feedback control as indicated by a chart 806 in Fig. 7B.

Meanwhile, where the catalyst as a whole is deteriorated so that the emission level is not conforming to the emission control regulation, the deterioration degree of the front catalyst 223 is larger than that of the rear catalyst 224, so that the fluctuation width of the rear $O_2$ sensor 227 mounted in the intermediate space 225 becomes large in comparison with the above case of the mounting position 703 shown in Fig. 6A as indicated by the chart 705 in Fig. 6C. Thus, a correlation value for judgment of the catalyst deterioration indicates a large value to some extent.

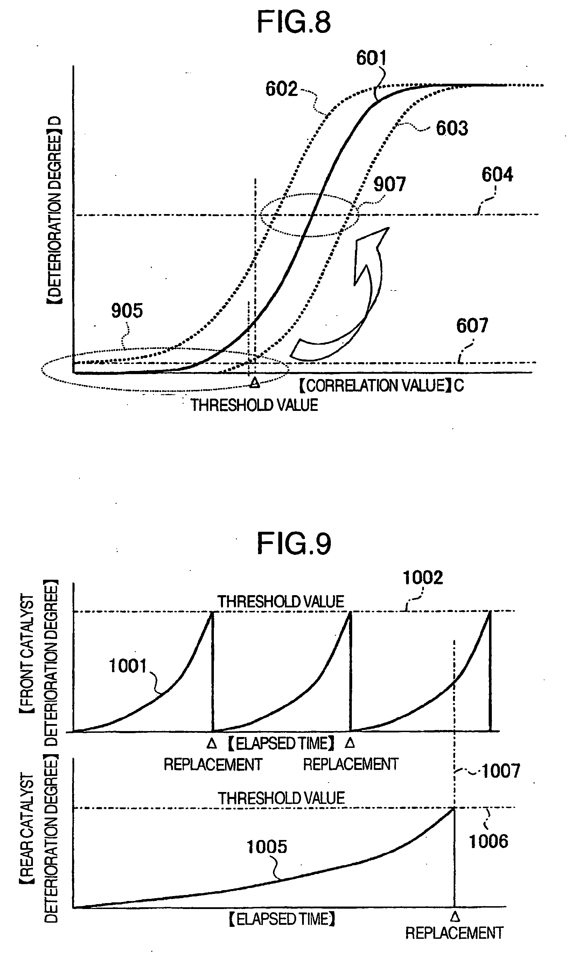

Fig. 8 shows an example of a relationship between the correlation value C and the deterioration degree D of the outputs of the front and rear $O_2$ sensors.

By configuring the catalyst and the front and rear $O_2$ sensors as shown in Fig. 7A, the threshold value of a deterioration degree, which becomes an ineffective level under the emission control regulation, can be shifted from a region 905 to a region 907, and it is easy to determine the threshold value of the correlation value.

In other words, the separation into the front catalyst 223 and the rear catalyst 224 causes that the front catalyst 223 is deteriorated earlier than when it is not separated, and it becomes possible to detect whether the catalyst is ineffective even if deterioration as a whole is little.

Fig. 9 shows an example of a relationship between the front catalyst deterioration degree and the rear catalyst deterioration degree in the catalytic converter apparatus of this embodiment (the present invention) shown in Fig. 7A.

A line 1001 indicates a correlation value of the outputs of the front and rear $O_2$ sensors to show a deterioration degree of the front catalyst 223. If the line reaches a threshold value 1002 where it is judged as ineffective, the failure diagnosis display unit 261 shows a screen for urging to replace. Then, the front catalyst 223 is replaced, and the deterioration degree of the front catalyst 223 returns to zero as a result of the replacement.

Meanwhile, the rear catalyst 224 is deteriorated slowly as indicated by a line 1005, and according to this embodiment, a deterioration degree of the rear catalyst 224 reaches an ineffective level 1006 at a point 1007 for the meantime the front catalyst 223 was replaced two times.

The deterioration property of the rear catalyst 224 varies depending on the distance between the front catalyst 223 and the rear catalyst 224, the space volume of the intermediate space 225 and the like, and the deterioration degree of the front catalyst 223 may be used when the rear catalyst 224 of a real automobile is judged as deteriorated.

In this embodiment, the deterioration degree of the rear catalyst 224 has the integrated value of the front catalyst deterioration degree determined as a rear catalyst deterioration index based on the relationship between the front catalyst deterioration degree and the rear catalyst deterioration degree shown in Fig. 9, and ineffective/effective of the rear catalyst is determined according to the rear catalyst deterioration index.

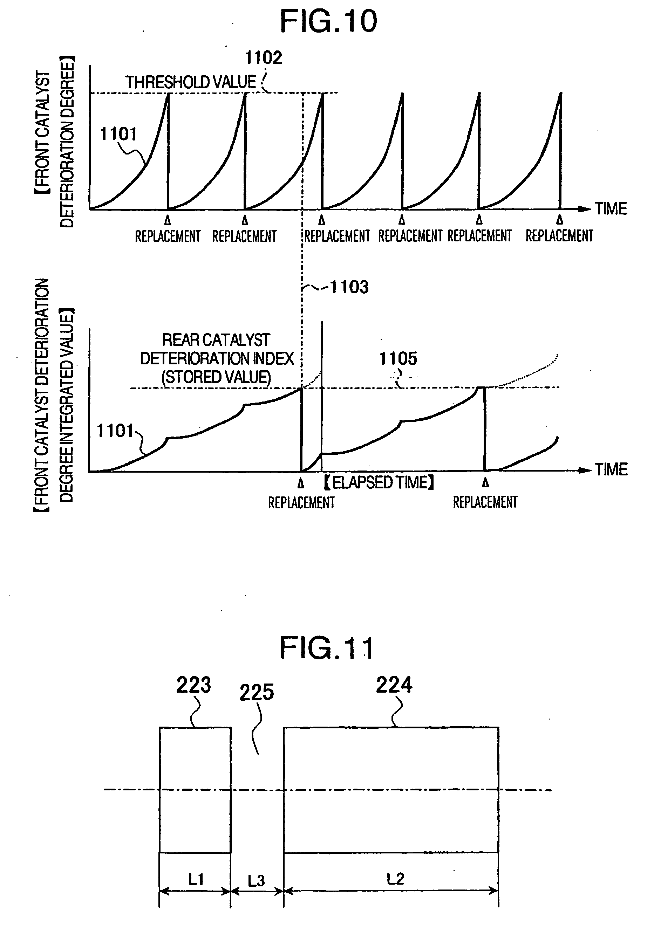

Fig. 10 shows an example of a relationship between the front catalyst deterioration degree and the front catalyst deterioration degree integrated value (rear catalyst deterioration index).

When a deterioration degree 1101 of the front catalyst 223 reaches a threshold value 1102, the catalyst is replaced with new one, and the deterioration degree returns to zero. The ineffective level of the rear catalyst deterioration of Fig. 9 described above is at 1103, and when the front catalyst deterioration degree integrated value 1101 reaches a threshold value 1105 corresponding to that level, the rear catalyst 224 is judged as ineffective, and the failure diagnosis display unit 261 urges the user or driver to replace the catalyst.

After the rear catalyst 224 is replaced, the front catalyst deterioration degree integrated value is cleared, and accumulation is restarted. Upon reaching the threshold value 1105 again, the failure diagnosis display unit 261 urges the user to replace the rear catalyst 224.

Fig. 11 shows an example of separation of a catalyst of the catalytic converter apparatus of this embodiment. Both the front catalyst 223 and the rear catalyst 224 have a columnar shape. The axial length of the front catalyst 223 is L1, and the axial length of the rear catalyst 224 is L2 which is longer than the axial length L1 of the front catalyst 223. Because of the difference in the axial length, the volume of the front catalyst 223 is smaller than that of the rear catalyst 224. The intermediate space 225 having an axial length L3 is present between the front catalyst 223 and the rear catalyst 224.

A relationship of the front catalyst 223 to the deterioration property due to a combination of the front catalyst 223 and the rear catalyst 224 is derived.

It is assumed that an HC (hydrocarbon) transformation efficiency is Efnew when the catalyst is new and an HC transformation efficiency is Efng when the catalyst is ineffective. Then, a split ratio L1:L2 of the front catalyst 223 and the rear catalyst 224 is expressed by following equation (2). The HC transformation efficiency here indicates a transformation efficiency of the combination of the front catalyst 223 and rear catalyst 224.

$$L1:L2=\{(Efnew-Efng)/Efnew\}:(Efng/Efnew) \ \dots \ (2)$$

When it is assumed that Efnew=90% and Efng=70%, it becomes that L1:L2=22%:78%, and a split ratio with allowance included becomes L1:L2=30%:70%.

Thus, the catalytic converter apparatus is separated into the front catalyst 223 and the rear catalyst 224 at a prescribed split ratio according to the transformation efficiency when they are new, the transformation efficiency when ineffective and the emission measured value. The volume of the front catalyst 223 is smaller than that of the rear catalyst 224.

The deterioration of the rear catalyst 224 becomes slower in comparison with the deterioration of the front catalyst 223 as the intermediate space 225 has a larger volume. Therefore, the relationship between the front catalyst deterioration degree and the rear catalyst deterioration degree shown in Fig. 9 is determined considering the volume of the intermediate space 225.

In other words, where the relationship of the front catalyst 223 to the deterioration property according to the combination of the front catalyst 223 and the rear catalyst 224 is derived, the volume of the intermediate space 225 is added to the elements contributing to the deterioration of the rear catalyst 224.

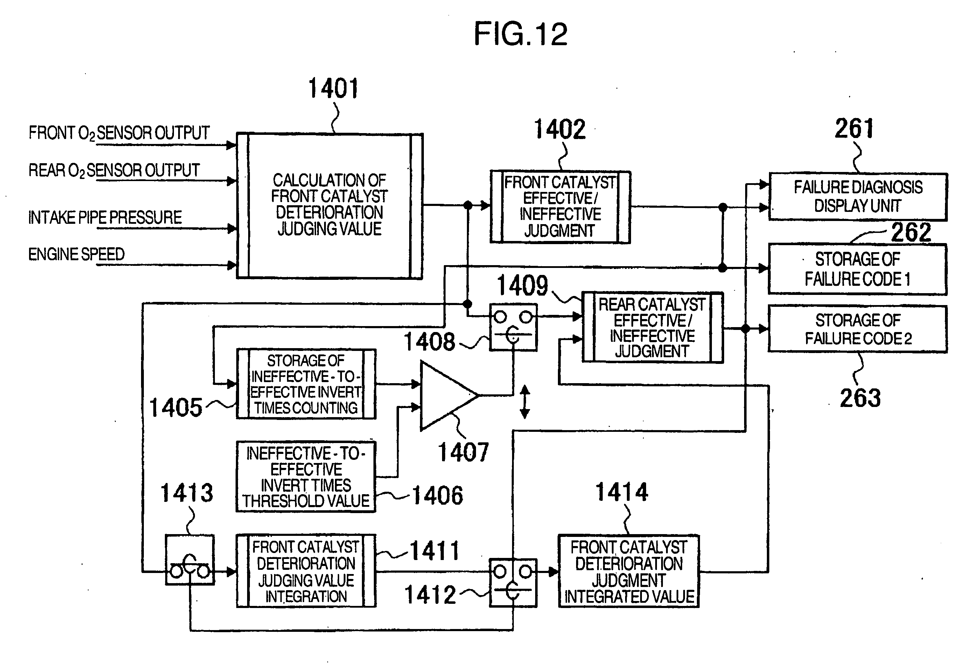

Fig. 12 shows an example of one structure of an effective/ineffective judgment processing section (apparatus for diagnosing deterioration of a catalyst) of the front catalyst 223 and the rear catalyst 224.

The effective/ineffective judgment processing section of this embodiment has a front catalyst deterioration judging value calculation section 1401, a front catalyst effective/ineffective judging section 1402, a front catalyst ineffective-to-effective invert times counter 1405, an ineffective-to-effective invert times threshold value setting device 1406, a comparator 1407, a rear catalyst effective/ineffective judging section 1409, a front catalyst deterioration judging value integrating section 1411, a front catalyst deterioration judgment integrated value storage section 1414, and switches 1408, 1412, 1413.

The front catalyst deterioration judging value calculation section 1401 is configured of, for example, the front catalyst deterioration degree arithmetic processing section shown in Fig. 4, and the front $O_2$ sensor output, the rear $O_2$ sensor output, the intake pipe pressure and the engine speed are inputted, and then the deterioration judging value (deterioration degree) of the front catalyst is calculated by correlated calculation.

The front catalyst effective/ineffective judging section 1402 judges effective/ineffective of the front catalyst 223 according to the front catalyst deterioration judging value calculated by the front catalyst deterioration judging value calculation section 1401.

In a case where it is judged as ineffective by the front catalyst effective/ineffective judging section 1402, it is notified to the driver by the diagnosis display made by the failure diagnosis display unit 261, the code of the front catalyst ineffective is written into the storage unit 262, and the count value of the front catalyst ineffective-to-effective invert times of the front catalyst ineffective-to-effective invert times counter 1405 is increased by one increment.

The comparator 1407 compares the ineffective-to-effective invert times threshold value which is set in the ineffective-to-effective invert times threshold value setting device 1406 with the count value of the front catalyst ineffective-to- effective invert times counter 1405. In this comparison, if the count value of invert times is larger than the threshold value, the deterioration judging value of the front catalyst 223 according to the front catalyst deterioration judging value calculation section 1401 is inputted to the rear catalyst effective/ineffective judging section 1409 by the switch 1408.

The front catalyst deterioration judging value integrating section 1411 integrates the deterioration judging values (deterioration degrees) of the front catalyst 223 calculated by the front catalyst deterioration judging value calculation section 1401. This integration is continued until the switch 1413 is turned off after the rear catalyst 224 is judged as ineffective by the rear catalyst effective/ineffective judging section 1409, and the integrated value at this point is written as the front catalyst deterioration judgment integration stored value into the front catalyst deterioration judgment integrated value storage section 1414 via the switch 1412.

The rear catalyst effective/ineffective judging section 1409 judges whether the rear catalyst 224 is effective or ineffective according to the deterioration judging value of the front catalyst 223 calculated by the front catalyst deterioration judging value calculation section 1401 or the front catalyst deterioration judgment integrated value integrated by the front catalyst deterioration judging value integrating section 1411.

Where it is judged by the rear catalyst effective/ineffective judging section 1409 that the rear catalyst 224 is ineffective, it is notified to the driver by the diagnosis display made by the failure diagnosis display unit 261, and a rear catalyst ineffective code is written into the storage unit 263.

The storage units 262, 263 are the same storage unit except that the front catalyst ineffective code and the rear catalyst ineffective code have a different memory address.

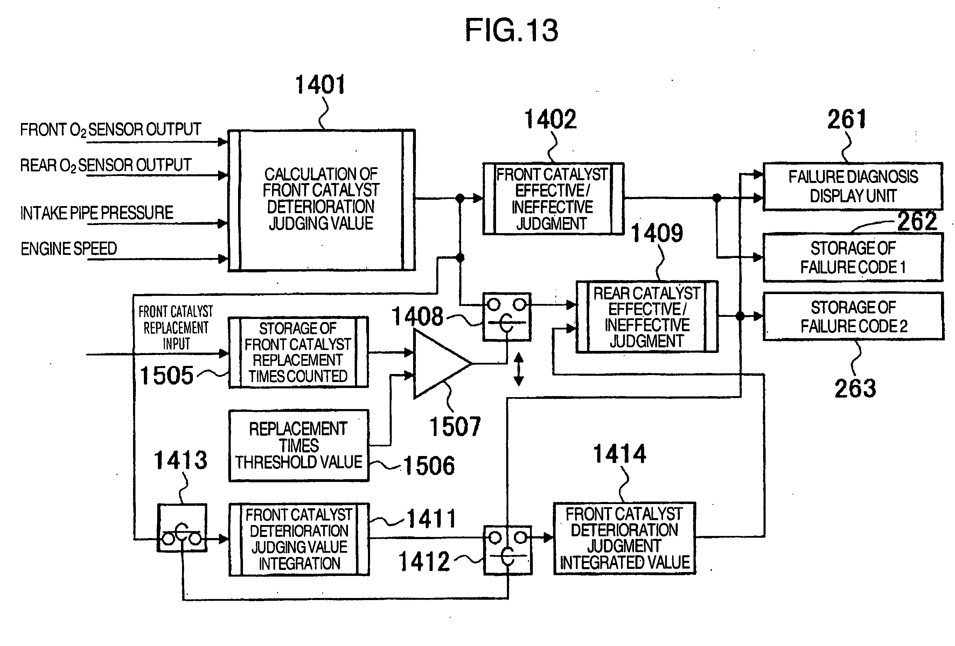

Fig. 13 shows an example of another structure of the effective/ineffective judgment processing section (apparatus for diagnosing deterioration of a catalyst) of the front catalyst 223 and the rear catalyst 224. In Fig. 13, portions corresponding to those of Fig. 12 are denoted by like reference numerals as those used in Fig. 12, and descriptions thereof will be omitted.

This embodiment is different from that of Fig. 12 described above on the point that the embodiment of Fig. 12 counts the front catalyst ineffective-to-effective invert times, while this embodiment counts the number of replacement times of the front catalyst 223.

In this embodiment, a front catalyst replacement times counter 1505 for counting the number of replacement times of the front catalyst 223, a replacement times threshold value setting device 1506, and a comparator 1507 for comparing the replacement times threshold value set in the replacement times threshold value setting device 1506 with the count value of the front catalyst replacement times counter 1505 are disposed, and the output of the comparator 1507 controls the switch 1408 in the same manner as in the embodiment of Fig. 12 described above. The count value of the front catalyst replacement times counter 1505 is updated by a car repair shop or the like by manually inputting when the front catalyst 223 is replaced.

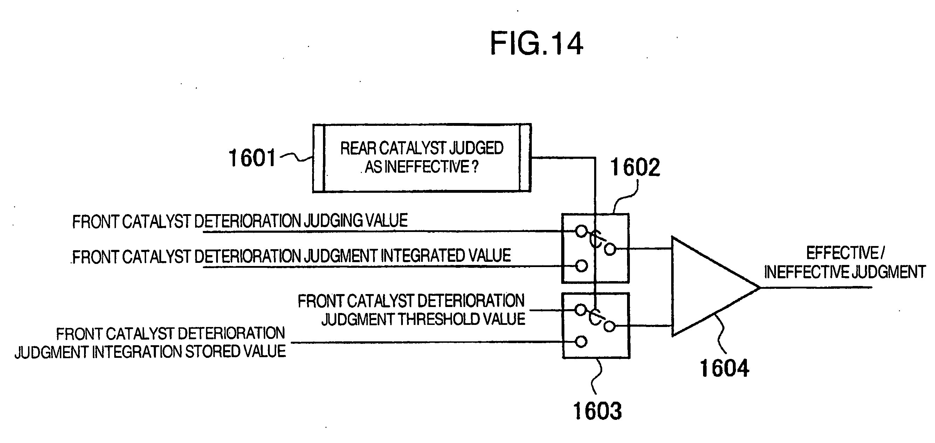

Details of the rear catalyst effective/ineffective judging section 1409 will be described with reference to Fig. 14.

The rear catalyst effective/ineffective judging section 1409 has a rear catalyst effective/ineffective judgment discrimination portion 1601, a comparator 1604, and switches 1602, 1603 for switching the input of the comparator 1604.

The rear catalyst effective/ineffective judgment discrimination portion 1601 judges whether or not the ineffective judgment of the rear catalyst 224 was done in the past, and if the ineffective judgment was not made at all, the front catalyst deterioration judging value (deterioration degree) is selected for the comparative value and the front catalyst deterioration judgment threshold value is selected for the threshold value by the switches 1602, 1603 as inputs to the comparator 1604, and they are compared by the comparator 1604 according to the structure shown in Fig. 12 or Fig. 13.

Where the front catalyst deterioration judging value inputted to the comparator 1604 is larger than the front catalyst deterioration judgment threshold value, the rear catalyst 224 is judged as ineffective.

Meanwhile, if it was judged as ineffective even once in the past, the front catalyst deterioration judgment integrated value and the front catalyst deterioration judgment integration stored value as a threshold value are selected as inputs to the comparator 1604 by the switches 1602, 1603, and they are compared by the comparator 1604.

Where the front catalyst deterioration judgment integrated value to be inputted to the comparator 1604 is larger than the front catalyst deterioration judgment integration stored value, the rear catalyst is judged as ineffective.

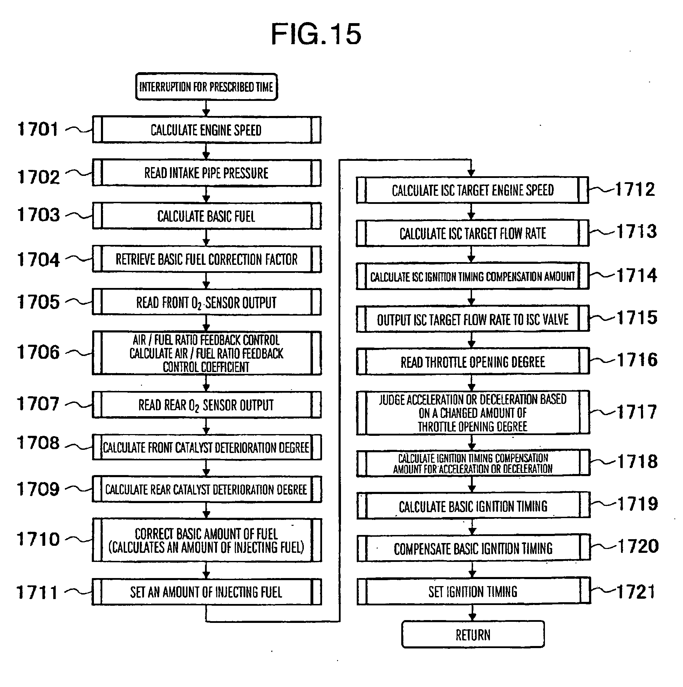

A processing flow of overall control to be performed by the engine control unit 250 including the catalyst deterioration judgment of this embodiment will be described with reference to the flowchart of Fig. 15.

First, the electrical signals of the crank angle sensor 213, and mainly the number of inputs per unit time of a change in pulse signal are counted, and the engine speed is calculated by arithmetic processing in step 1701. In step 1702, the intake pipe pressure is read by the output from the intake pipe pressure sensor 205.

Subsequently, a basic amount of fuel is calculated based on the engine speed and the intake pipe pressure in step 1703.

Then, a basic fuel correction factor is retrieved based on the engine speed and the intake pipe pressure in step 1704.

The output of the front $O_2$ sensor 226 which is in front of the catalyst is read in step 1705.

Air/fuel ratio feedback control is performed based on the output signal of the front $O_2$ sensor 226 to obtain a target air/fuel ratio in step 1706, thereby determining an air/fuel ratio feedback control coefficient.

The output of the rear $O_2$ sensor 227 which is after the catalyst is read in step 1707.

Then, a deterioration degree (deterioration judging value) of the front catalyst 223 is calculated by correlated calculation according to the front $O_2$ sensor output and the rear $O_2$ sensor output in step 1708.

A deterioration degree of the rear catalyst 224 is calculated based on the deterioration degree of the front catalyst 223 described above in step 1709.

The basic amount of fuel is corrected according to the basic fuel correction factor and the air/fuel ratio feedback control coefficient in step 1710. And, an amount of fuel to inject the corrected amount of fuel is set in step 1711.

Then, a target engine speed for idling is calculated in step 1712. And, a target flow rate of the ISC valve 203 is calculated from the target engine speed in step 1713.

An ignition timing compensation amount for suppressing the idling speed from varying is calculated in step 1714.

The target flow rate of the ISC valve 203 is outputted to the ISC valve 203 to control the ISC valve 203 in step 1715.

Then, a throttle opening degree is read in step 1716. And, a time change amount of the read throttle opening degree is determined to judge acceleration or deceleration in step 1717.

An ignition timing compensation amount for acceleration or deceleration is calculated based on the acceleration or deceleration judgment in step 1718.

A basic ignition timing is calculated in step 1719. And, the calculated ignition timing compensation for idling, acceleration or deceleration is applied to the basic ignition timing in step 1720 to determine the final ignition timing. And, the final ignition timing is set in step 1721, and ignition is performed at the required ignition timing.

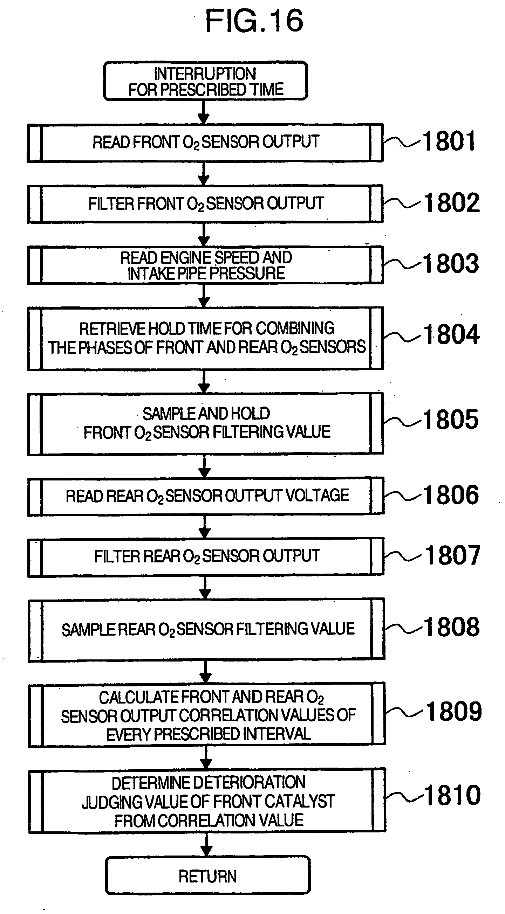

Then, a processing flow of the catalyst deterioration degree calculation of the front catalyst by the front catalyst deterioration degree arithmetic processing section shown in Fig. 4 will be described with reference to the flowchart of Fig. 16.

First, the output of the front $O_2$ sensor 226 is read in step 1801. And, the output of the front $O_2$ sensor 226 is filtered in step 1802.

An engine speed and an intake pipe pressure are read in step 1803, and a hold time for combining the phases of the outputs of the $O_2$ sensors before and after the catalyst according to the engine speed and the intake pipe pressure is map retrieved in step 1804. The filtering value of the front $O_2$ sensor 226 is sampled while reflecting the hold time in step 1805.

The output of the rear $O_2$ sensor 227 is read in step 1806. And, the output of the rear $O_2$ sensor 227 is filtered in step 1807. The filtering value of the rear $O_2$ sensor 227 is sampled in step 1808.

A correlation value of a prescribed interval is calculated from the sample values of the filtering values of the $O_2$ sensors before and after the catalyst in step 1809. The correlation value is calculated by the above-described equation (1).

The deterioration judging value (deterioration degree) of the front catalyst 226 is determined from the correlation value in step 1810.

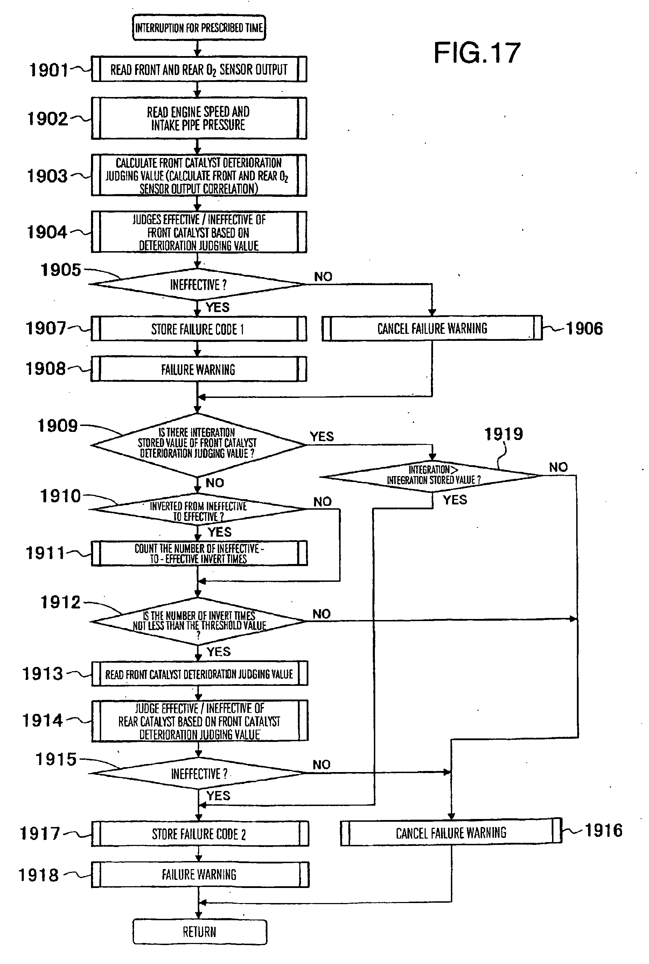

The processing flow of the effective/ineffective judgment of the front catalyst 223 and the rear catalyst 224 by the effective/ineffective judgment processing section shown in Fig. 12 will be described with reference to the flowchart of Fig. 17.

The outputs of the $O_2$ sensors 226, 227 before and after the catalyst are read in step 1901. And, the engine speed and the intake pipe pressure are read in step 1902.

The deterioration judging value of the front catalyst 226 is calculated from the outputs of the $O_2$ sensors before and after the catalyst, the engine speed and the intake pipe pressure in step 1903. This deterioration judging value is calculated from the correlation value of the outputs of the front and rear $O_2$ sensors according to the processing flow shown in Fig. 16.

Then, the deterioration of the front catalyst 223 is judged for effective/ineffective according to the deterioration judging value in step 1904.

The procedure is branched in step 1905 depending on the judged result effective or ineffective determined in step 1904. If the judged result is ineffective, the procedure advances to step 1907, where ineffective code 1 of the front catalyst ineffective is stored, and a failure warning is given by the failure display unit 261 in the next step 1908.

If the judged result of the front catalyst 223 is effective, the procedure advances to step 1906, and the failure warning is cancelled.

It is judged in step 1909 whether there is an integration stored value of the deterioration judging value of the front catalyst 223. If there is not an integration stored value, the procedure advances to step 1910, where it is judged whether the deterioration judgment of the front catalyst 223 is inverted from ineffective to effective.

If it is inverted, the procedure advances to step 1911, where the number of ineffective-to-effective invert times is counted to judge whether the number of invert times is equal to or more than the threshold value in step 1912. If the number of invert times is equal to or more than the threshold value, the procedure advances to step 1913, where the deterioration judging value of the front catalyst 223 is read. And, the deterioration judgment of the rear catalyst 224 is judged for effective/ineffective from the deterioration judging value of the front catalyst 223 in step 1914.

The procedure is branched in step 1915 depending on the judged result effective or ineffective in step 1914. If the judged result is ineffective, the procedure advances to step 1917, where ineffective code 2 of the rear catalyst ineffective is stored, and a failure warning is given by the failure display unit 261 in the nest step 1918.

If the judged result of the rear catalyst 224 is effective, the procedure advances to step 1916, where the failure warning is cancelled.

If it is judged in the step 1909 that there is a deterioration judgment integration stored value of the front catalyst 223, the procedure advances to step 1919, where the deterioration judgment integration stored value and the front catalyst deterioration judgment integrated value (threshold value) are compared to judge whether the rear catalyst 224 is effective or ineffective.

If the front catalyst deterioration judgment integrated value is larger than the deterioration judgment integration stored value, the rear catalyst is ineffective. Then, the code 2 of the rear catalyst ineffective is stored and a failure warning is given in steps 1917, 1918. Meanwhile, if the front catalyst deterioration judgment integrated value is not larger than the deterioration judgment integration stored value, the procedure advances to step 1916, where the failure warning is cancelled.

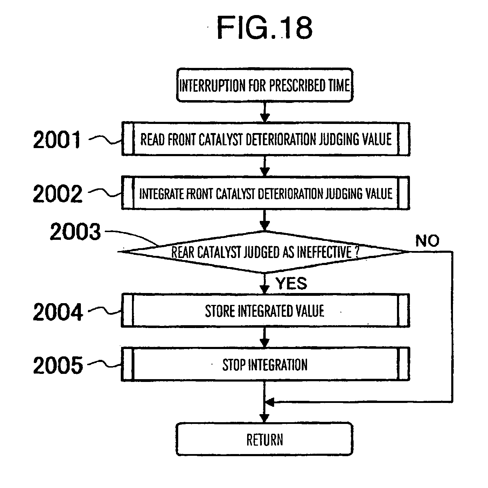

Fig. 18 shows a processing flow of the front catalyst deterioration judging value integration and judging value storing performed by the ineffective judgment processing section shown in Fig. 12.

The front catalyst deterioration judging value is read in step 2001. The front catalyst deterioration judging value is integrated in step 2002.

It is judged in step 2003 whether the rear catalyst 224 is judged as ineffective. If the rear catalyst 224 is judged as ineffective, the procedure advances to step 2004, where the above-described integrated value is stored, and the integration is stopped in step 2005.

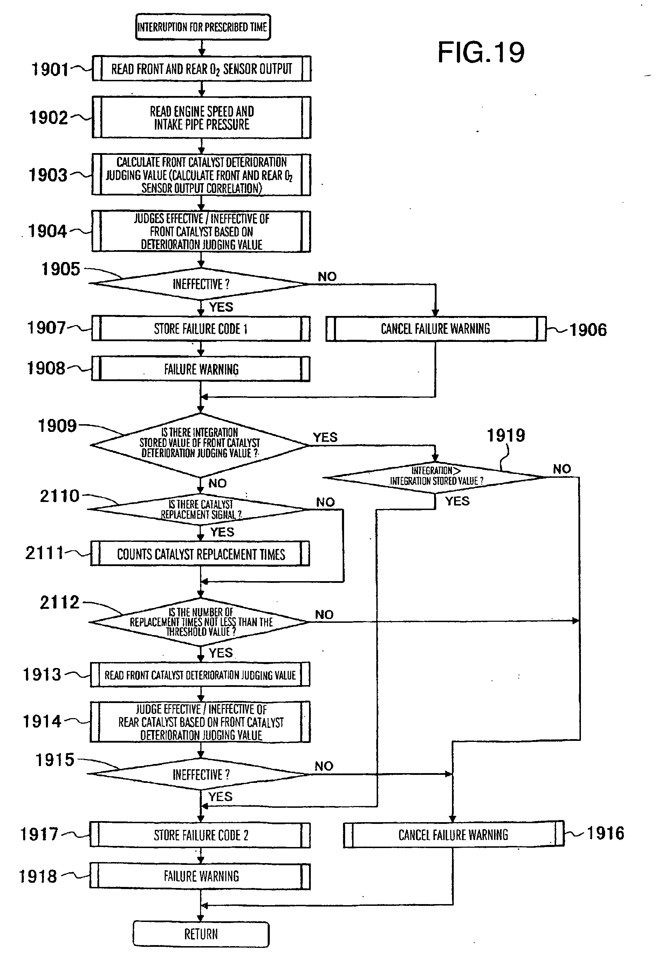

Then, the processing flow of effective/ineffective judgment by the effective/ineffective judgment processing section of the front catalyst 223 and the rear catalyst 224 shown in Fig. 13 will be described with reference to the flowchart of Fig. 19. In Fig. 19, steps corresponding to those of Fig. 17 are denoted by the same step numbers as those used in Fig. 17, and descriptions thereof will be omitted.

In this processing flow, it is judged in step 2110 whether or not the front catalyst replacement signal to be manually inputted is present, and a replacement times count value is incremented in step 2111. And, it is judged in step 2112 whether the count value is equal to or more than a threshold value, and it is judged whether the deterioration of the rear catalyst 224 is effective or ineffective.

Excepting the above, it is configured such that the processing flow is the same as in the flowchart shown in Fig. 17.

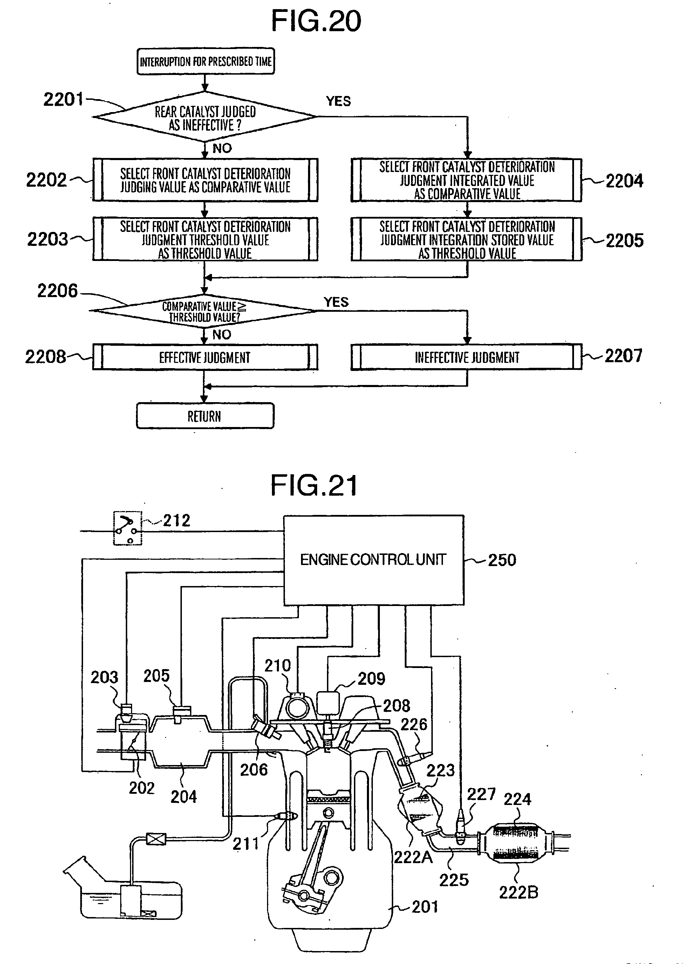

Then, the processing flow of the rear catalyst effective/ineffective judgment by the rear catalyst effective/ineffective judging section 1409 shown in Fig. 14 will be described with reference to the flowchart of Fig. 20.

It is judged in step 2201 whether the deterioration ineffective of the rear catalyst 224 has been judged. If the ineffective judgment has not been made, the procedure advances to step 2202, where the front catalyst deterioration judging value is selected as a comparative value, and the front catalyst deterioration judgment threshold value is selected as a threshold value in step 2203.

Meanwhile, if it was judged as ineffective, the procedure advances to step 2204, where the front catalyst deterioration judgment integrated value is selected as a comparative value, and the front catalyst deterioration judgment integration stored value is selected as a threshold value in step 2205.

It is judged in step 2206 whether the comparative value is equal to or more than the threshold value, and if the comparative value is equal to or more than the threshold value, it is judged in step 2207 that the rear catalyst 224 is ineffective, and if the comparative value is not equal to or more than the threshold value, it is judged in step 2208 that the rear catalyst is effective.

As described above, the catalytic converter apparatus is separated into the front catalyst 223 and the rear catalyst 224 at a prescribed split ratio according to a transformation efficiency when they are new, a transformation efficiency when ineffective and an emission measured value, and the $O_2$ sensors 226, 227 are mounted before the separated front catalyst 223 and at the split point between them. And, the deterioration of the catalyst is diagnosed by comparing the outputs of the front and rear $O_2$ sensors, so that the front catalyst is deteriorated earlier than when it is not separated, and it becomes possible to detect ineffective even if the deterioration is slight as a whole. And, the deterioration degree of the rear catalyst 224 is obtained according to the deterioration degree and the number of replacement times of the front catalyst 223, so that the front catalyst 223 is not replaced even if it is deteriorated.

The front catalyst 223 and the rear catalyst 224 are housed in the single housing 222 in the embodiment described above, but the apparatus of the invention is not limited to it. As shown in Fig. 21, the front catalyst 223 and the rear catalyst 224 may be housed in separate housings 222A, 222B. In Fig. 21, portions corresponding to those of Fig. 1 are denoted by like reference numerals as those used in Fig. 1, and descriptions thereof will be omitted.

Instead of the $O_2$ sensors 226, 227, a sensor which outputs a signal corresponding to the oxygen density or fuel concentration contained in the exhaust gas can also be used.

Features, components and specific details of the structures of the above-described embodiments may be exchanged or combined to form further embodiments optimized

for the respective application. As far as those modifications are readily apparent for an expert skilled in the art they shall be disclosed implicitly by the above description without specifying explicitly every possible combination, for the sake of conciseness of the present description.

It should be further understood by those skilled in the art that although the foregoing description has been made on embodiments of the invention, the invention is not limited thereto and various changes and modifications may be made without departing from the scope of the appended claims.

**Claims**

1. An apparatus for diagnosing deterioration of a catalyst for an internal combustion engine, having a first catalyst (223) and a second catalyst (224) and provided with sensors (226, 227) for detecting a particular exhaust component before and after the first catalyst (223), **characterized in that**:

a relationship between a deterioration property involved in clarification of an exhaust gas of the internal combustion engine by a combination of the first catalyst (223) and the second catalyst (224) and a deterioration property of the first catalyst (223) are determined previously;

a deterioration degree of the first catalyst (223) is calculated according to outputs from the sensors (226, 227) disposed before and after the first catalyst (223);

deterioration of the first catalyst (223) is judged according to the deterioration degree; and

deterioration of the second catalyst (224) is judged according to the deterioration degree of the first catalyst (223) and said relationship.

2. The apparatus for diagnosing deterioration of a catalyst for an internal combustion engine according to claim 1, wherein a volume of a space (225) between the first catalyst (223) and the second catalyst (224) is added to elements contributing to the deterioration of the second catalyst (224) when a relationship of the first catalyst (223) to the deterioration property due to the combination of the first catalyst (223) and the second catalyst (224) is derived.

3. The apparatus for diagnosing deterioration of a catalyst for an internal combustion engine according to claim 1 or 2, wherein the sensors (226, 227) for detecting the particular exhaust component are 02 sensors which output a binary output for the presence or not of oxygen contained in the exhaust gas.

4. The apparatus for diagnosing deterioration of a catalyst for an internal combustion engine according to claim 1 or 2, wherein the sensors (226, 227) for detecting the particular exhaust component are sensors which output a signal corresponding to an oxygen density or a fuel concentration contained in the exhaust gas.

5. A method for diagnosing deterioration of a catalyst for an internal combustion engine, having a first catalyst (223) and a second catalyst (224) and provided with sensors (226, 227) for detecting a particular exhaust component before and after the first catalyst (223), the method being **characterized by** the steps of:

determining previously a relationship between a deterioration property involved in clarification of an exhaust gas from the internal combustion engine by a combination of the first catalyst (223) and the second catalyst (224) and a deterioration property of the first catalyst (223) ;

calculating a deterioration degree of the first catalyst (223) according to outputs from the sensors (226, 227) disposed before and after the first catalyst (223);

judging deterioration of the first catalyst (223) according to the deterioration degree; and

judging deterioration of the second catalyst (224) according to the deterioration degree of the first catalyst (223) and said relationship.

**Patentansprüche**

1. Vorrichtung zur Diagnose der Verschlechterung eines Katalysators für einen Verbrennungsmotor, die einen ersten Katalysator (223) und einen zweiten Katalysator (224) aufweist und vor und nach dem ersten Katalysator (223) mit Sensoren (226, 227) zum Erfassen einer bestimmten Abgaskomponente versehen ist, **dadurch gekennzeichnet, dass**:

eine Beziehung zwischen einer Verschlechterungseigenschaft, die an der Klärung eines Abgases des Verbrennungsmotors durch eine Kombination aus dem ersten Katalysator (223) und

dem zweiten Katalysator (224) beteiligt ist, und einer Verschlechterungseigenschaft des ersten Katalysators (223) vorab bestimmt wird;

ein Grad der Verschlechterung des ersten Katalysators (223) nach Maßgabe von Ausgaben von den Sensoren (226, 227), die vor und nach dem ersten Katalysator (223) angeordnet sind, berechnet wird;

die Verschlechterung des ersten Katalysators (223) nach Maßgabe des Grads der Verschlechterung beurteilt wird; und

die Verschlechterung des zweiten Katalysators (224) nach Maßgabe des Grads der Verschlechterung des ersten Katalysators (223) und der Beziehung beurteilt wird.

2. Vorrichtung zur Diagnose der Verschlechterung eines Katalysators für einen Verbrennungsmotor nach Anspruch 1, wobei ein Volumen eines Raums (225) zwischen dem ersten Katalysator (223) und dem zweiten Katalysator (224) zu Elementen hinzugefügt wird, die zur Verschlechterung des zweiten Katalysators (224) beitragen, wenn eine Beziehung des ersten Katalysators (223) zur Verschlechterungseigenschaft aufgrund der Kombination des ersten Katalysators (223) und des zweiten Katalysators (224) abgeleitet wird.

3. Vorrichtung zur Diagnose der Verschlechterung eines Katalysators für einen Verbrennungsmotor nach Anspruch 1 oder 2, wobei die Sensoren (226, 227) zum Erfassten der bestimmten Abgaskomponente 02 Sensoren sind, die eine binäre Ausgabe für das Vorhandensein oder Nichtvorhandensein von im Abgas enthaltenem Sauerstoff ausgeben.

4. Vorrichtung zur Diagnose der Verschlechterung eines Katalysators für einen Verbrennungsmotor nach Anspruch 1 oder 2, wobei die Sensoren (226, 227) zum Erfassen der bestimmten Abgaskomponente Sensoren sind, die ein Signal ausgeben, welches einer im Abgas enthaltenen Sauerstoffdichte oder Kraftstoffkonzentration entspricht.

5. Verfahren zur Diagnose der Verschlechterung eines Katalysators für einen Verbrennungsmotor, die einen ersten Katalysator (223) und einen zweiten Katalysator (224) aufweist und vor und nach dem ersten Katalysator (223) mit Sensoren (226, 227) zum Erfassen einer bestimmten Abgaskomponente versehen ist, wobei das Verfahren durch die folgenden Schritte **gekennzeichnet** ist:

   Bestimmen einer Beziehung zwischen einer Verschlechterungseigenschaft, die an der Klärung eines Abgases von dem Verbrennungsmotor durch eine Kombination aus dem ersten
   Katalysator (223) und dem zweiten Katalysator (224) beteiligt ist, und einer Verschlechterungseigenschaft des ersten Katalysators (223) vorab;
   Berechnen eines Grads der Verschlechterung des ersten Katalysators (223) nach Maßgabe von Ausgaben von den Sensoren (226, 227), die vor und nach dem ersten Katalysator (223) angeordnet sind;
   Beurteilen der Verschlechterung des ersten Katalysators (223) nach Maßgabe des Grads der Verschlechterung; und
   Beurteilen der Verschlechterung des zweiten Katalysators (224) nach Maßgabe des Grads der Verschlechterung des ersten Katalysators (223) und der Beziehung.

## Revendications

1. Appareil de diagnostic de la détérioration d'un catalyseur pour un moteur à combustion interne, comprenant un premier catalyseur (223) et un deuxième catalyseur (224) et muni de capteurs (226, 227) pour détecter un composant d'échappement particulier avant et après le premier catalyseur (223), **caractérisé en ce que** :

   une relation entre une propriété de détérioration impliquée dans la clarification d'un gaz d'échappement du moteur à combustion interne par une combinaison du premier catalyseur (223) et du deuxième catalyseur (224) et une propriété de détérioration du premier catalyseur (223) est déterminée au préalable ;
   un degré de détérioration du premier catalyseur (223) est calculé en fonction des sorties émises par les capteurs (226, 227) disposés avant et après le premier catalyseur (223) ;
   la détérioration du premier catalyseur (223) est évaluée en fonction du degré de détérioration ; et
   la détérioration du deuxième catalyseur (224) est évaluée en fonction du degré de détérioration du premier catalyseur (223) et ladite relation.

2. L'appareil de diagnostic de la détérioration d'un catalyseur pour un moteur à combustion interne selon la revendication 1, dans lequel un volume d'un espace (225) entre le premier catalyseur (223) et le deuxième catalyseur (224) est ajouté aux éléments contribuant à la détérioration du deuxième catalyseur (224) quand une relation du premier catalyseur (223) par rapport à la propriété de détérioration due à la combinaison du premier catalyseur (223) et du deuxième catalyseur (224) est dérivée.

3. L'appareil de diagnostic de la détérioration d'un catalyseur pour un moteur à combustion interne selon la revendication 1 ou 2, dans lequel les capteurs (226, 227) pour détecter le composant d'échappement particulier sont 02 capteurs qui émettent une sortie binaire pour la présence ou non d'oxygène contenu dans le gaz d'échappement.

4. L'appareil de diagnostic de la détérioration d'un catalyseur pour un moteur à combustion interne selon la revendication 1 ou 2, dans lequel les capteurs (226, 227) pour détecter le composant d'échappement particulier sont des capteurs qui émettent un signal correspondant à une densité d'oxygène ou à une concentration en carburant contenue dans le gaz d'échappement.

**5.** Méthode de diagnostic de la détérioration d'un catalyseur pour un moteur à combustion interne, comprenant un premier catalyseur (223) et un deuxième catalyseur (224) et muni de capteurs (226, 227) pour détecter un composant d'échappement particulier avant et après le premier catalyseur (223), le procédé étant **caractérisé par** les étapes consistant à :

déterminer au préalable une relation entre une propriété de détérioration impliquée dans la clarification d'un gaz d'échappement provenant du moteur à combustion interne par une combinaison du premier catalyseur (223) et du deuxième catalyseur (224) et une propriété de détérioration du premier catalyseur (223) ;

calculer un degré de détérioration du premier catalyseur (223) en fonction des sorties émises par les capteurs (226, 227) disposés avant et après le premier catalyseur (223) ;

évaluer la détérioration du premier catalyseur (223) en fonction du degré de détérioration ; et

évaluer la détérioration du deuxième catalyseur (224) en fonction du degré de détérioration du premier catalyseur (223) et ladite relation.

# FIG.1

# FIG.2

# FIG.3

## FIG.4

FRONT O₂ SENSOR OUTPUT → FILTERING PROCESSING — 501

SAMPLE / HOLD PROCESSING — 503

ENGINE SPEED →
INTAKE PIPE PRESSURE → HOLD TIME [ Ne ] [ Pm ] — 502

CALCULATION OF CORRELATION VALUE FOR EVERY PRESCRIBED INTERVAL — 506

NUMBER OF SAMPLES

$$\sum_{i=1} (Pre(i) - \overline{Pre})^2 \cdot (Post(i) - \overline{Post})^2$$

REAR O₂ SENSOR OUTPUT → FILTERING PROCESSING — 504

SAMPLING PROCESSING — 505

[DETERIORATION DEGREE] D / [CORRELATION VALUE] C — 507

## FIG.5

[DETERIORATION DEGREE] D

605 — VARIATION 1

602

601

606

603

EMISSION CONTROL REGULATION I

604

608 — VARIATION 2

607

EMISSION CONTROL REGULATION II

Δ  [CORRELATION VALUE] C

THRESHOLD VALUE UNDER EMISSION CONTROL REGULATION I

# FIG.6A

702    701    703

# FIG.6B

704

[FRONT O₂ SENSOR OUTPUT VOLTAGE]

[ELAPSED TIME] →

# FIG.6C

705

[REAR O₂ SENSOR OUTPUT VOLTAGE]

[ELAPSED TIME] →

# FIG.7A

226    227    222    805

223    225    224

# FIG.7B

806

[FRONT O₂ SENSOR OUTPUT VOLTAGE]

[ELAPSED TIME] →

# FIG.7D

808

[REAR O₂ SENSOR OUTPUT VOLTAGE]

[ELAPSED TIME] →

# FIG.7C

807

[REAR O₂ SENSOR OUTPUT VOLTAGE]

[ELAPSED TIME] →

# FIG.8

# FIG.9

# FIG.10

[FRONT CATALYST DETERIORATION DEGREE]

1102

THRESHOLD VALUE

1101

TIME

REPLACEMENT REPLACEMENT REPLACEMENT REPLACEMENT REPLACEMENT REPLACEMENT

[FRONT CATALYST DETERIORATION DEGREE INTEGRATED VALUE]

~1103

REAR CATALYST DETERIORATION INDEX (STORED VALUE)

1105

1101

TIME

REPLACEMENT 【ELAPSED TIME】 REPLACEMENT

# FIG.11

223 225 224

L1 L3 L2

# FIG.12

FRONT O₂ SENSOR OUTPUT
REAR O₂ SENSOR OUTPUT
INTAKE PIPE PRESSURE
ENGINE SPEED

1401 — CALCULATION OF FRONT CATALYST DETERIORATION JUDGING VALUE

1402 — FRONT CATALYST EFFECTIVE/INEFFECTIVE JUDGMENT

261 — FAILURE DIAGNOSIS DISPLAY UNIT

262 — STORAGE OF FAILURE CODE 1

263 — STORAGE OF FAILURE CODE 2

1409 — REAR CATALYST EFFECTIVE/INEFFECTIVE JUDGMENT

1408

1407

1405 — STORAGE OF INEFFECTIVE-TO-EFFECTIVE INVERT TIMES COUNTING

1406 — INEFFECTIVE-TO-EFFECTIVE INVERT TIMES THRESHOLD VALUE

1413

1411 — FRONT CATALYST DETERIORATION JUDGING VALUE INTEGRATION

1412

1414 — FRONT CATALYST DETERIORATION JUDGMENT INTEGRATED VALUE

FIG.13

- 1401 CALCULATION OF FRONT CATALYST DETERIORATION JUDGING VALUE
  - Inputs: FRONT O$_2$ SENSOR OUTPUT, REAR O$_2$ SENSOR OUTPUT, INTAKE PIPE PRESSURE, ENGINE SPEED
- 1402 FRONT CATALYST EFFECTIVE / INEFFECTIVE JUDGMENT
- 1408
- 1409 REAR CATALYST EFFECTIVE / INEFFECTIVE JUDGMENT
- 1414 FRONT CATALYST DETERIORATION JUDGMENT INTEGRATED VALUE
- 1505 STORAGE OF FRONT CATALYST REPLACEMENT TIMES COUNTED
  - FRONT CATALYST REPLACEMENT INPUT
- 1506 REPLACEMENT TIMES THRESHOLD VALUE
- 1507
- 1413
- 1411 / 1412 FRONT CATALYST DETERIORATION JUDGING VALUE INTEGRATION
- 261 FAILURE DIAGNOSIS DISPLAY UNIT
- 262 STORAGE OF FAILURE CODE 1
- 263 STORAGE OF FAILURE CODE 2

## FIG.14

1601 — REAR CATALYST JUDGED AS INEFFECTIVE ?

1602

FRONT CATALYST DETERIORATION JUDGING VALUE

FRONT CATALYST DETERIORATION JUDGMENT INTEGRATED VALUE

FRONT CATALYST DETERIORATION JUDGMENT THRESHOLD VALUE

FRONT CATALYST DETERIORATION JUDGMENT INTEGRATION STORED VALUE

1603

1604

EFFECTIVE / INEFFECTIVE JUDGMENT

EP 1 783 338 B1

# FIG.15

INTERRUPTION FOR PRESCRIBED TIME

1701 — CALCULATE ENGINE SPEED

1702 — READ INTAKE PIPE PRESSURE

1703 — CALCULATE BASIC FUEL

1704 — RETRIEVE BASIC FUEL CORRECTION FACTOR

1705 — READ FRONT $O_2$ SENSOR OUTPUT

1706 — AIR / FUEL RATIO FEEDBACK CONTROL
CALCULATE AIR / FUEL RATIO FEEDBACK
CONTROL COEFFICIENT

1707 — READ REAR $O_2$ SENSOR OUTPUT

1708 — CALCULATE FRONT CATALYST DETERIORATION DEGREE

1709 — CALCULATE REAR CATALYST DETERIORATION DEGREE

1710 — CORRECT BASIC AMOUNT OF FUEL
(CALCULATES AN AMOUNT OF INJECTING FUEL)

1711 — SET AN AMOUNT OF INJECTING FUEL

CALCULATE ISC TARGET ENGINE SPEED —1712

CALCULATE ISC TARGET FLOW RATE —1713

CALCULATE ISC IGNITION TIMING COMPENSATION AMOUNT —1714

OUTPUT ISC TARGET FLOW RATE TO ISC VALVE —1715

READ THROTTLE OPENING DEGREE —1716

JUDGE ACCELERATION OR DECELERATION BASED
ON A CHANGED AMOUNT OF
THROTTLE OPENING DEGREE —1717

CALCULATE IGNITION TIMING COMPENSATION
AMOUNT FOR ACCELERATION OR DECELERATION —1718

CALCULATE BASIC IGNITION TIMING —1719

COMPENSATE BASIC IGNITION TIMING —1720

SET IGNITION TIMING —1721

RETURN

# FIG.16

```
INTERRUPTION
FOR PRESCRIBED TIME
        │
        ▼
READ FRONT O₂ SENSOR OUTPUT                              ~1801
        │
        ▼
FILTER FRONT O₂ SENSOR OUTPUT                            ~1802
        │
        ▼
READ ENGINE SPEED AND
INTAKE PIPE PRESSURE                                     ~1803
        │
        ▼
RETRIEVE HOLD TIME FOR COMBINING
THE PHASES OF FRONT AND REAR O₂ SENSORS                  ~1804
        │
        ▼
SAMPLE AND HOLD
FRONT O₂ SENSOR FILTERING VALUE                          ~1805
        │
        ▼
READ REAR O₂ SENSOR OUTPUT VOLTAGE                       ~1806
        │
        ▼
FILTER REAR O₂ SENSOR OUTPUT                             ~1807
        │
        ▼
SAMPLE REAR O₂ SENSOR FILTERING VALUE                    ~1808
        │
        ▼
CALCULATE FRONT AND REAR O₂
SENSOR OUTPUT CORRELATION VALUES OF                      ~1809
EVERY PRESCRIBED INTERVAL
        │
        ▼
DETERMINE DETERIORATION
JUDGING VALUE OF FRONT CATALYST                          ~1810
FROM CORRELATION VALUE
        │
        ▼
RETURN
```

FIG.17

```
                    ┌─────────────────────────────┐
                    │ INTERRUPTION FOR PRESCRIBED TIME│
                    └─────────────────────────────┘
                                  │
1901 ──┤ READ FRONT AND REAR O₂ SENSOR OUTPUT │
                                  │
1902 ──┤ READ ENGINE SPEED AND
         INTAKE PIPE PRESSURE │
                                  │
1903 ──┤ CALCULATE FRONT CATALYST DETERIORATION
         JUDGING VALUE (CALCULATE FRONT AND REAR O₂
         SENSOR OUTPUT CORRELATION) │
                                  │
1904 ──┤ JUDGES EFFECTIVE / INEFFECTIVE OF
         FRONT CATALYST BASED ON
         DETERIORATION JUDGING VALUE │
                                  │
1905 ──< INEFFECTIVE ? >──── NO ──────────────┐
           │ YES                               │
                                               │
1907 ──┤ STORE FAILURE CODE 1 │    ┤ CANCEL FAILURE WARNING │ ── 1906
           │                                   │
1908 ──┤ FAILURE WARNING │                     │
           │ ◄─────────────────────────────────┘
```

## FIG.18

INTERRUPTION FOR PRESCRIBED TIME

2001 — READ FRONT CATALYST DETERIORATION JUDGING VALUE

2002 — INTEGRATE FRONT CATALYST DETERIORATION JUDGING VALUE

2003 — REAR CATALYST JUDGED AS INEFFECTIVE ? — NO

YES

2004 — STORE INTEGRATED VALUE

2005 — STOP INTEGRATION

RETURN

# FIG.19

INTERRUPTION FOR PRESCRIBED TIME

1901 — READ FRONT AND REAR $O_2$ SENSOR OUTPUT

1902 — READ ENGINE SPEED AND INTAKE PIPE PRESSURE

1903 — CALCULATE FRONT CATALYST DETERIORATION JUDGING VALUE (CALCULATE FRONT AND REAR $O_2$ SENSOR OUTPUT CORRELATION)

1904 — JUDGES EFFECTIVE / INEFFECTIVE OF FRONT CATALYST BASED ON DETERIORATION JUDGING VALUE

1905 — INEFFECTIVE ? — NO

YES

1907 — STORE FAILURE CODE 1

CANCEL FAILURE WARNING — 1906

1908 — FAILURE WARNING

1909 — IS THERE INTEGRATION STORED VALUE OF FRONT CATALYST DETERIORATION JUDGING VALUE ? — YES

1919 — INTEGRATION > INTEGRATION STORED VALUE ? — NO

YES

NO

2110 — IS THERE CATALYST REPLACEMENT SIGNAL ? — NO

YES

2111 — COUNTS CATALYST REPLACEMENT TIMES

2112 — IS THE NUMBER OF REPLACEMENT TIMES NOT LESS THAN THE THRESHOLD VALUE ? — NO

YES

1913 — READ FRONT CATALYST DETERIORATION JUDGING VALUE

1914 — JUDGE EFFECTIVE / INEFFECTIVE OF REAR CATALYST BASED ON FRONT CATALYST DETERIORATION JUDGING VALUE

1915 — INEFFECTIVE ? — NO

YES

1917 — STORE FAILURE CODE 2

CANCEL FAILURE WARNING — 1916

1918 — FAILURE WARNING

RETURN

EP 1 783 338 B1

# FIG.20

```
        INTERRUPTION FOR PRESCRIBED TIME

2201 ──  REAR CATALYST JUDGED          YES
         AS INEFFECTIVE ?
           │ NO                          │
2202 ── SELECT FRONT CATALYST DETERIORATION    SELECT FRONT CATALYST DETERIORATION ── 2204
        JUDGING VALUE AS COMPARATIVE VALUE     JUDGMENT INTEGRATED VALUE
                                               AS COMPARATIVE VALUE

2203 ── SELECT FRONT CATALYST DETERIORATION    SELECT FRONT CATALYST DETERIORATION ── 2205
        JUDGMENT THRESHOLD VALUE               JUDGMENT INTEGRATION STORED VALUE
        AS THRESHOLD VALUE                     AS THRESHOLD VALUE

2206 ──  COMPARATIVE VALUE ≧          YES
         THRESHOLD VALUE?
           │ NO                          │
2208 ──  EFFECTIVE JUDGMENT           INEFFECTIVE JUDGMENT ── 2207

                   RETURN
```

# FIG.21

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5740676 A
- US 6003309 A
- WO 2005066472 A1